# EUROPEAN PATENT SPECIFICATION

(11) **EP 0 312 111 B1**
(45) Date of publication and mention of the grant of the patent: **02.04.1997**
(21) Application number: 88117174.8
(22) Date of filing: 15.10.1988
(51) Int. Cl.: A47L 9/28

(54) **Electric cleaner**
Elektrisches Reinigungsgerät
Appareil électrique de nettoyage

(30) Priority: 16.10.1987 JP 261088/87; 16.10.1987 JP 261089/87
(43) Date of publication of application: 19.04.1989
(73) Proprietor: MATSUSHITA ELECTRIC INDUSTRIAL CO., LTD., Kadoma-shi, Osaka-fu, 571 (JP)
(72) Inventor: Takashima, Yoshinori, Omihachiman-shi Shiga-ken (JP)
(74) Representative: Eisenführ, Speiser & Partner

(56) References cited:
- EP-A- 0 224 309
- US-A- 4 601 082
- US-A- 4 680 827

## Description

The invention relates to an electric vacuum cleaner comprising a main body unit including a blower motor driving a blower, a suction nozzle connected by a suction channel to the blower, a hand control unit for setting a desired speed of the blower motor according to the kind of material to be cleaned of dust, a dust sensor unit provided in the suction channel to the suction nozzle, control means for controlling the speed of the blower motor, said control means including a phase control circuit and a variable resistance circuit, the variable resistance circuit including a variable resistor coupled to the hand control unit to allow said setting of a desired speed, and transfer control means operated by the output of the dust sensor unit.

In recent years, carpets are often used as floor materials for rooms. In order to absorb dust from the hair feet of the carpets, electric cleaners are demanded larger in suction work power, with electric input into the blower motor becoming larger.

Furthermore, the number of the revolution of the blower motor of the electric cleaner may be selectively controlled by a hand control unit in accordance with the cleaning objects, and the cleaning may be effected with the necessary minimum amount of suction air thereby to save power and reduce noise. Also, a dust sensor is provided between the suction opening and the dust collecting apparatus so as to automatically increase the number of the revolutions of the blower motor when the dust has been detected by the sensor.

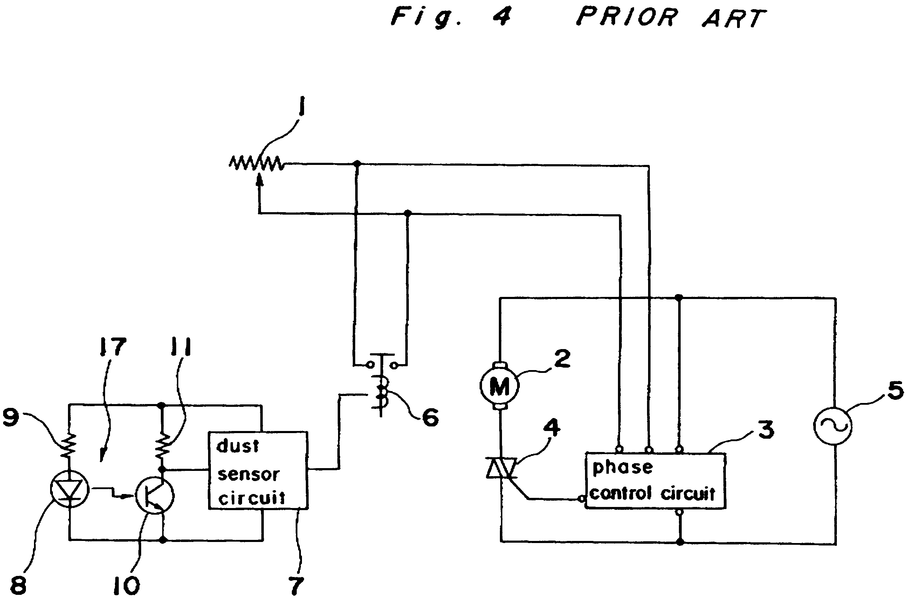

Such a conventional electric cleaner as described hereinabove will be described hereinafter with reference to the drawings. Fig. 4 is an electric circuit diagram of a conventional electric cleaner, wherein a variable resistor 1 continuously controls the number of the revolutions of a blower motor 2 variably by the hand operation unit of the electric cleaner. Bi-directional thyristor 4 varies a conductive angle with respect to the blower motor 2 of the AC power supply 5 by a gate signal to be outputted from a phase control circuit 3 in the resistance value thereof so as to vary the number of the revolutions of the blower motor 2. An electromagnetic relay closes a contact by a dust detection signal from a dust sensor circuit 7 so as to short-circuit a variable resistor 1. Also, there is provided a light diode 8 (hereinafter referred to as LED), a current limit resistor 9 for the LED 8, and a load resistor 11 for a phototransistor 10. The phototransistor 10 receives the lights from the LED 8 so as to change the intensity of the light into current variation coming from the LED 8 to be caused by the existence of the absorbed dust, so that the dust sensor circuit 7 outputs a dust detecting signal through the detection of the variation.

An electric cleaner as constructed as described hereinabove will be operated in a manner as described hereinafter.

To begin with, by the controlling of a variable resistor 1 built-in within the hand control unit 14, current controlled in phase to the blower motor 2 is applied through the bi-directional thyristor 4 to be controlled by the phase control circuit 3 so as to rotate the blower motor 2 at the set number of the rotation for a cleaning operation.

In the case of this example, the number of the revolutions of the blower motor 2 is reduced with the larger resistance value of the variable resistor 1, so that the number of the revolutions becomes maximum during the short-circuit of the resistance value. Accordingly, the suction air amount is varied through the operation of the variable resistor 1 in accordance with the type of the cleaning object.

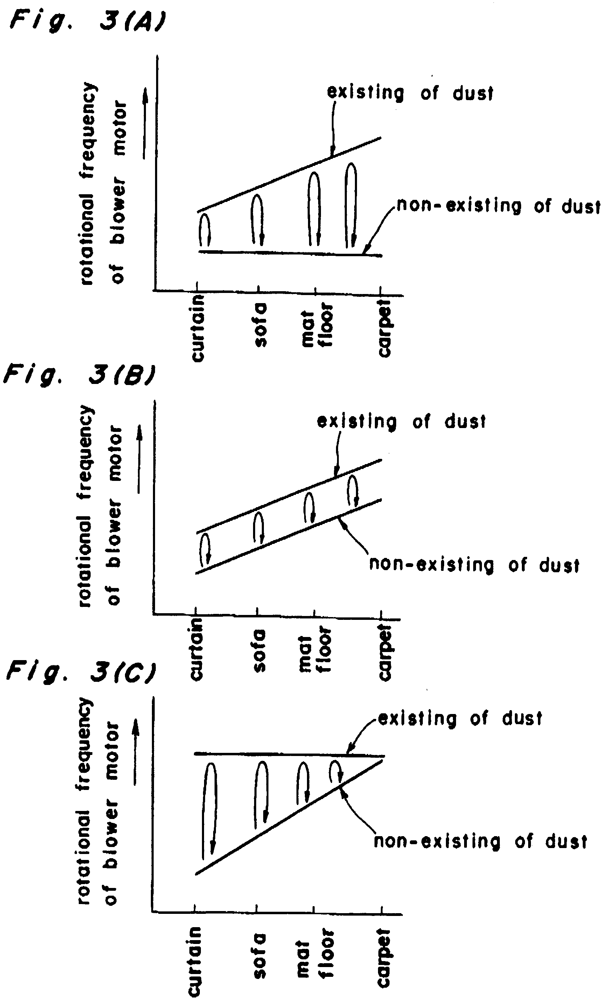

When the dust is absorbed from the suction nozzle 12, and passes through a dust sensor unit 17 composed of LED 8 and phototransistor 10, it prevents the light from the LED 8 from arriving at the phototransistor 10, so that the dust sensor circuit 7 operates to close the contact of the electromagnetic relay 6. Accordingly, the variable resistor 1 is short-circuited to rotate the blower motor 2 at the maximum revolution number. Furthermore, after a given time (three seconds in the case of the embodiment) has passed after the dust which passes through the dust sensor unit 17 has been removed, the contact of the electromagnetic relay 6 opens, so that the number is restored to one of the revolutions established by the variable resistor 1. The operation pattern of the blow motor 2 is shown in Fig. 3(C).

However, when there is dust to be absorbed if a knob of the variable resistor 1 of the hand operation unit 14 is placed in a position of the "curtain" of, for example, the minimum number of the rotations in such conventional construction as described hereinabove, the revolution number of the blower motor 2 becomes maximum, with a problem that the curtain may be sucked into the nozzle, or the sound of the electric cleaner becomes larger.

From US-A-46 80 827 a vacuum cleaner is known in which the speed of the motor is primarily controlled in dependance of the amount of dust detected. Moreover, this control can be combined with manual power switching means for pre-selecting the power range for specific cleaning operations, such that the light-optical control varies the speed continuously within the pre-set power ranges.

From US-A-46 01 082 a vacuum cleaner is known which includes a dust detector for either controlling a display or a buzzer if dust is detected. The speed of the blower motor can be controlled in dependance of the dust amount detected.

It is an object of the present invention to provide an electric vacuum cleaner which is capable of effecting a cleaning operation quietly and which can safely be adapted to the kind of material to be cleaned.

According to the invention, an electric vacuum cleaner of the kind described above is characterized in that said variable resistance circuit also includes an additional resistance, and in that the combined resistance of the variable resistance circuit is changed in response to the output of the dust sensor unit in such a way that, if dust is detected by the dust sensor, the speed of the blower motor corresponds to the speed set by the hand control unit and, if no dust is detected by the dust sensor, the speed is reduced either to a constant lower value independent from that set by the hand control unit or by a constant percentage of that set by the hand control unit.

Preferable embodiments are defined in the dependent claims.

These and other objects and features of the present invention will become clear from the following description taken in conjunction with the preferred embodiments thereof with reference to the accompanying drawings, in which:
Fig. 1 is a circuit diagram of an electric cleaner showing a first embodiment of the present invention;
Fig. 2 is a circuit diagram of an electric cleaner showing a second embodiment of the present invention;
Fig. 3, (A) to (C), is a graph showing an operational pattern in cases of existence and non-existence of dust with respect to the electric cleaner of the present invention (A) and (B), and of the conventional one (C);
Fig. 4 is an electric circuit diagram for the conventional electric cleaner;
Fig. 5 is an outer appearance view of an electric cleaner; and
Fig. 6 is an enlarged view of a hand operation unit employed in the electric cleaner of Fig. 5.

Before the description of the present invention proceeds, it is to be noted that like parts are designated by like reference numerals throughout the accompanying drawings.

The electric cleaner of the present invention for use in household and industry use which is capable of effecting a cleaning operation quietly with the operational property being improved, is provided with a dust sensor unit between a blower motor to be continuously varied in the number of the revolutions by a hand operating unit and a suction opening or a dust collecting apparatus from the suction opening, and either one of a control means which is adapted to normally effect a constant rotation of the blower motor in spite of the control of the rotation number of the hand operation unit when no dust has been detected by the dust sensor, and to effect the transfer control so as to increase the number of the revolutions of the blower motor up to the revolution number established by the hand operation unit when the dust has been detected, or a control means for reducing the number of the revolutions of the blower motor by a constant percentage as compared with the number of the revolutions established by the hand operation unit when no dust has been detected by the dust sensor unit, and for controlling in transfer so as to rotate the blower motor with the number of the revolutions established by the hand operation unit when no dust has been detected.

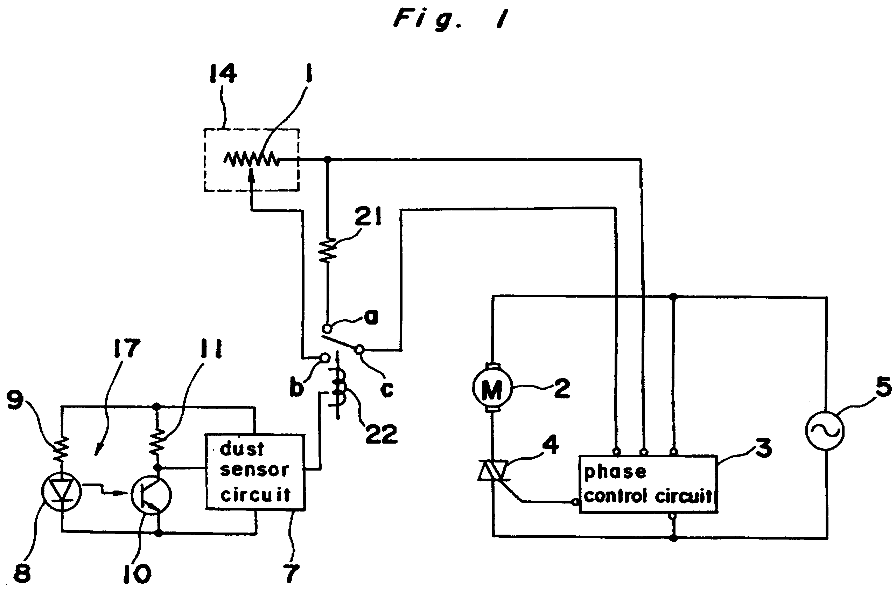

Referring now to the drawings, there is shown in Fig. 1 a circuit diagram for an electric cleaner according to one embodiment of the present invention, wherein one end of a resistor 21 is connected with one end of a variable resistor 1 connected to a phase control circuit 3, while the other end thereof 21 is connected with a contact a of an electromagnetic relay 22 as a control means, with a control b being connected with a slider of the variable resistor 1, a control c which is a common contact being connected with a phase control circuit 3. Bi-directional thyristor 4 varies a conductive angle with respect to the blower motor 2 of the AC power supply 5 by a gate signal to be outputted from the phase control circuit 3 in the resistance value thereof so as to vary the number of the revolutions of the blower motor 2. An electromagnetic relay closes a contact by a dust detection signal from a dust sensor circuit 7 so as to short-circuit the variable resistor 1. Also, there is provided a light diode 8 (hereinafter referred to as LED), a current limit resistor 9 for the LED 8, and a load resistor 11 for a photo-transistor 10. The phototransistor 10 receives the light from the LED 8 so as to change the intensity of the light into current variation coming from the LED 8 to be caused by the existence of the absorbed dust, so that the dust sensor circuit 7 outputs the dust detecting signal through the detection of the variation.

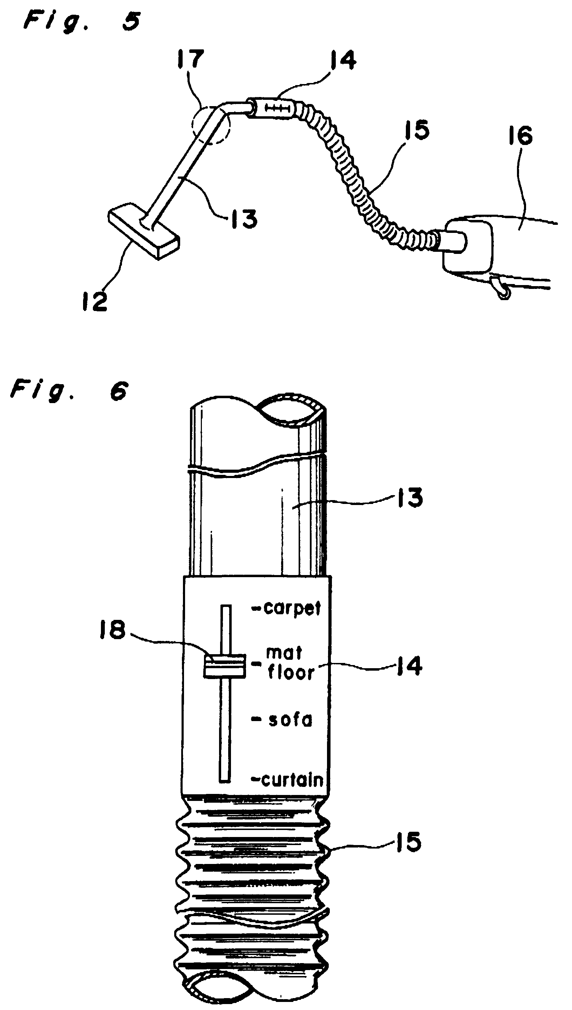

Fig. 5 is an appearance view of an electric cleaner provided with a suction nozzle 12 for sucking the dust off the floor. The nozzle 12 is connected with a main body unit 16 for an electric cleaner with a blower motor 2, a dust collecting apparatus being built-in therein through a pipe 13, a hand operation unit 14 for varying the number of the revolutions of the blower motor 2, and a hose 15. A dust sensor unit 17 provided in the pipe 13 has an LED 8, a phototransistor 10 disposed therein.

Fig. 6 is an enlarged view of the hand operation unit of Fig. 5, wherein a knob 18 is coupled to a slider of the variable resistor 1 of Fig. 4. The knob 18 is varied to set the number of the revolutions of the blower motor 2 so that the suction air amount may be obtained in accordance with cleaning objects such as carpet, floor (boarded floor) and so on.

In Fig. 1, the variable resistor 1 is operated to control the rotation of the blower motor 2. If no dust passes through the dust sensor unit 17 through the suction, the contact c of the electromagnetic relay 22 is connected with the contact a so as to be connected onto the side of the resistor 21, with the blower motor 2 being uniformly rotated with the number of revolutions established by the resistor 21 independently of the value of the variable resistor 1 of the hand operation unit 14.

When the dust sensor unit 17 detects dust, the contact c of the electromagnetic relay 22 is switched to the contact b by the output of the dust sensor circuit 7 so as to be connected to the side of the slider of the variable resistor 1, so that the rotation is effected with the number of the revolutions of the blower motor 2 established by the variable resistor 1 of the hand operation unit 14. Namely, when the knob of the variable resistor 1 is located in a position of curtain, sofa, floor or carpet, which is an object of the cleaning as shown in Fig. 6, the blower motor is rotated in accordance with each of the positions.

As a result, when the dust sensor unit 17 has detected no dust as shown in Fig. 3(A), the blower motor 2 is rotated at a constant low speed rotation to be set by the resistor 21. On the other hand, when dust has been detected, the number of the revolutions may be made proper in accordance with the cleaning object established by the hand operation unit 14. It is to be noted that the operation characteristics of the blower motor 2 shown in Fig. 3(A) may be designed comparatively freely at a ratio of the resistor value between the variable resistor 1 and resistor 21.

The other embodiment of the present invention will be further described hereinafter.

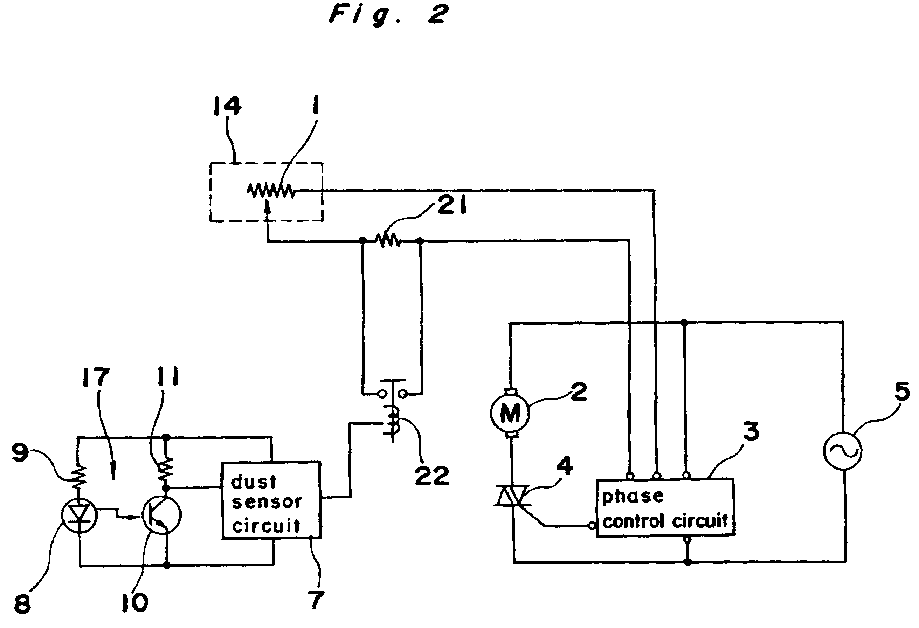

Referring to Fig. 2, one end of the resistor 21 is connected with a phase control circuit 3 and the other end is connected with the slider of the variable resistor 1, with the contact of the electromagnetic relay 22 being connected with both the ends of the resistor 21 so as to short-circuit the resistor 21 at the closed contact.

The operation thereof will be described hereinafter. In Fig. 2, the variable resistor 1 is operated to control the rotation of the blower motor 2. At this time, when no dust passes through the dust sensor unit 17 through the suction, the contact of the electromagnetic relay 22 is opened. The combined resistance seen from the phase control circuit 3 becomes the total of these resistance values, with the variable resistor 1 and the resistor 21 being provided in series, so that the number of the revolutions of the blower motor 2 is reduced by a constant percentage as compared with the number of the revolutions established by the hand operation unit 14.

When the dust sensor unit 17 detects dust, the contact of the electromagnetic relay 22 is closed by the output of the dust sensor circuit 7 to short-circuit the resistor 21, so that the combined resistance value seen from the phase control circuit 3 becomes a resistance value of the variable resistor 1 only. Namely, when the knob of the variable resistor 1 is located in the position of curtain, sofa, matting, or carpet, which is a cleaning object respectively as shown in Fig. 6, the blower motor 2 is rotated in accordance with the respective position.

As a result, when the dust sensor unit 17 has detected dust as shown in Fig. 3(B), the number of the revolutions becomes one of the blower motor 2 at a rate corresponding to the setting of the variable resistor 1 of the hand operating unit 14 so as to increase the number of revolutions. The operation characteristics of the blower motor 2 shown in Fig. 3(B) may be designed comparatively freely at the rate between the variable resistor 1 and the resistor 21.

## Claims

1. Electric vacuum cleaner comprising a main body unit (16) including a blower motor (2) driving a blower, a suction nozzle (12) connected by a suction channel to the blower, a hand control unit (14) for setting a desired speed of the blower motor according to the kind of material to be cleaned of dust, a dust sensor unit (7) provided in the suction channel to the suction nozzle, control means for controlling the speed of the blower motor, said control means including a phase control circuit (3) and a variable resistance circuit, the variable resistance circuit including a variable resistor (1) coupled to the hand control unit (14) to allow said setting of a desired speed, and transfer control means (22) operated by the output of the dust sensor unit (7),
characterized in that
said variable resistance circuit also includes an additional resistance (21), and in that the combined resistance of the variable resistance circuit (1) is changed in response to the output of the dust sensor unit (7) in such a way that, if dust is detected by the dust sensor (7), the speed of the blower motor (2) corresponds to the speed set by the hand control unit (14) and, if no dust is detected by the dust sensor (7), the speed is reduced either to a constant lower value independent from that set by the hand control unit (14) or by a constant percentage of that set by the hand control unit (14).

2. Electric vacuum cleaner according to claims 1,
characterized in that the transfer control means (22) includes a change-over contact (a, b, c) of a relay (22) operated by the dust sensor unit (17) for changing between the variable resistor (1) and the additional resistor (21) having a fixed value in such a way that in case of no dust being detected, the speed of the blower motor (2) is set to a constant low value (Fig. 1).

3. Electric vacuum cleaner according to claim 1,
characterized in that the transfer control means (22) is a relay contact operated by the dust sensor unit (17) for adding the additional resistor (21) in series with the variable resistor (1) when no dust is detected by the dust sensor unit (17) in such a way that in case of no dust being detected, the speed of the blower motor (2) is reduced by a given percentage as compared with the preselected speed (Fig. 2).

4. Electric vacuum cleaner according to any preceding claim,
characterized in that the dust sensor unit (17) comprises a light emitting diode (8) and a phototransistor (10).

## Patentansprüche

1. Elektrischer Staubsauger mit einem Gerätekörper (16), der einen ein Gebläse antreibenden Gebläsemotor (2) enthält; mit einer Saugdüse (12), die über einen Saugkanal mit dem Gebläse verbunden ist; mit einer manuellen Einstellvorrichtung (14) zum Einstellen einer erwünschten, dem zu reinigen Material entsprechenden Gebläsemotordrehzahl; mit einer Staubsensoreinheit (7) im Saugkanal zur Saugdüse; mit Steuermitteln zum Steuern der Drehzahl des Gebläsemotors, wobei die Steuermittel eine Phasensteuerschaltung (3) enthalten und eine variable Widerstandsschaltung, die einen mit der manuellen Einstellvorrichtung (14) gekoppelten Stellwiderstand (1) zum Einstellen einer gewünschten Drehzahl enthält; und mit vom Ausgangssignal der Staubsensoreinheit (7) betätigten Übertragungssteuermitteln (22),
dadurch gekennzeichnet, daß
die Stellwiderstandsschaltung einen zusätzlichen Widerstand (21) enthält, und daß der kombinierte Widerstand der variablen Widerstandsschaltung (1) auf das Ausgangssignal der Staubsensoreinheit (7) hin derart verändert wird, daß, wenn vom Staubsensor (7) Staub festgestellt wird, die Drehzahl des Gebläsemotors (2) der über die manuelle Einstelleinheit (14) eingestellten Drehzahl entspricht, und, wenn kein Staub von dem Staubsensor (7) festgestellt wird, die Drehzahl entweder unabhängig von dem über die manuelle Einstelleinheit (14) eingestellten Wert auf einen konstanten niedrigeren Wert verringert wird oder um einen konstanten Prozentsatz des über die manuelle Einstelleinheit (14) eingestellten Wertes verringert wird.

2. Elektrischer Staubsauger nach Anspruch 1,
dadurch gekennzeichnet, daß die Übertragungssteuermittel (22) einen Umschaltkontakt (a, b, c) eines Relais (22) enthalten, der von der Staubsensoreinheit (17) betätigt wird, um zwischen dem Stellwiderstand (1) und dem zusätzlichen Widerstand (21) mit einem festen Wert in einer Weise umzuschalten, daß, wenn kein Staub festgestellt wird, die Geschwindigkeit des Gebläsemotors (2) auf einen konstanten niedrigen Wert eingestellt wird (Figur 1).

3. Elektrischer Staubsauger nach Anspruch 1,
dadurch gekennzeichnet, daß die Übertragungssteuermittel (22) aus einem Relaiskontakt bestehen, der von der Staubsensoreinheit (17) betätigt wird, um den zusätzlichen Widerstand (21) mit dem Stellwiderstand (1) in Serie zu schalten, wenn die Staubsensoreinheit (17) keinen Staub feststellt, derart, daß, wenn kein Staub festgestellt wird, die Drehzahl des Gebläsemotors (2) um einen gegebenen Prozentsatz gegenüber der vorgewählten Drehzahl verringert wird (Figur 2).

4. Elektrischer Staubsauger nach einem vorhergehenden Ansprüche,
dadurch gekennzeichnet, daß die Staubsensoreinheit (17) eine lichtemittierende Diode (8) und einen Fototransistor (10) enthält.

## Revendications

1. Un aspirateur électrique comportant un corps (16) muni d'un moteur (2) entraînant une turbine de ventilation, un ajutage d'aspiration (12) connecté par un canal d'aspiration à la turbine de ventilation, une unité de contrôle manuel (14) pour ajuster une vitesse désirée du moteur de la turbine selon le type de matériaux devant être nettoyés de leurs poussières, une unité de détection de poussière (7) prévue dans le canal d'aspiration au niveau de l'ajutage d'aspiration, un moyen de contrôle pour commander la vitesse du moteur de la turbine, ledit moyen de contrôle comportant un circuit de contrôle de phase (3) et un circuit à résistance variable, le circuit à résistance variable comportant une résistance variable (1) couplée à l'unité de contrôle manuel (14) pour permettre ledit ajustement de la vitesse désirée, et un moyen de contrôle de transfert (22) activé par la sortie de l'unité de détection de poussière (7),
caractérisé en ce que
ledit circuit à résistance variable comporte aussi une résistance additionnelle (21), et en ce que la résistance combinée du circuit à résistance variable (1) est modifiée en réponse à la sortie de l'unité de détection de poussière (7) de manière à ce que, si de la poussière est détectée par le détecteur de poussière (7), la vitesse du moteur de la turbine (2) correspond à la vitesse ajustée par l'unité de contrôle manuel (14) et, si aucune poussière n'est détectée par le détecteur de poussière (7), la vitesse est réduite à une valeur basse constante indépendante de celle ajustée par l'unité de contrôle manuel (14) ou par un pourcentage constant de celle ajustée par l'unité de contrôle manuel (14).

2. Aspirateur électrique selon la revendication 1,
caractérisé en ce que le moyen de contrôle de transfert (22) comporte une contact de conversion (a,b,c) d'un relais (22) activé par l'unité de détection de poussière (17) pour le changement entre la résistance variable (1) et la résistance additionnelle (2) comportant une valeur fixée de manière à ce qu'au cas où aucune poussière n'est détectée, la vitesse du moteur de la turbine (2) est ajustée à une valeur basse constante (Fig. 1).

3. Aspirateur électrique selon la revendication 1,
caractérisé en ce que le moyen de contrôle de transfert (22) est un contact de relais activé par l'unité de détection de poussière (17) pour additionner la résistance additionnelle (21) en série avec la résistance variable (1) lorsqu'aucune poussière n'est détectée par l'unité de détection de poussière (17) de manière à ce qu'au cas où aucune poussière n'est détectée, la vitesse du moteur de la turbine (2) est réduite par un pourcentage donné par rapport à la vitesse présélectionnée (Fig.2).

4. Aspirateur électrique selon l'une quelconque des revendications précédentes,
caractérisé en ce que l'unité de détection de poussière (17) comporte une diode électroluminescente (8) et un phototransistor (10).
